# EUROPEAN PATENT SPECIFICATION

(11) **EP 2 603 443 B1**
(45) Date of publication and mention of the grant of the patent: **18.05.2016**
(21) Application number: 11743553.7
(22) Date of filing: 12.08.2011
(51) Int. Cl.: B65G 23/06, B65G 45/22

(54) **CLEANING-IN-PLACE SYSTEM FOR FLAT BELTS**
REINIGUNGSSYSTEM VOR ORT FÜR FLACHRIEMEN
SYSTÈME DE NETTOYAGE EN PLACE POUR COURROIES PLATES

(30) Priority: 29.10.2010 US 915258; 20.09.2010 US 886460; 13.08.2010 US 856578
(43) Date of publication of application: 19.06.2013
(73) Proprietor: Habasit AG, 4153 Reinach (CH)
(72) Inventor: LUCCHI, Marco, CH-4141 Münchenstein (CH)
(74) Representative: Bohest AG
(86) International application number: PCT/EP2011/063991
(87) International publication number: WO 2012/020142

(56) References cited:
- EP-A1- 0 569 071
- EP-A1- 0 726 215
- WO-A1-2008/095322
- WO-A2-2005/009874
- GB-A- 624 204
- US-A- 3 680 684
- US-A- 5 203 861
- US-A1- 2009 050 185
- US-B1- 6 367 613

## Description

### CROSS-REFERENCE TO RELATED APPLICATIONS

The present application claims the benefit of U.S. Patent Application No. 12/856,578 filed on August 13, 2010, the disclosure of which is incorporated herein by reference, and of U.S. Patent Application No. 12/288,602, filed on October 22, 2008, which is a continuation-in-part of U.S. Patent Application No. 11/672,568, filed on February 8, 2007, the disclosures of which are incorporated herein by reference.

### FIELD OF THE INVENTION

The present invention relates to flat belt conveying apparatus.

### BACKGROUND OF THE INVENTION

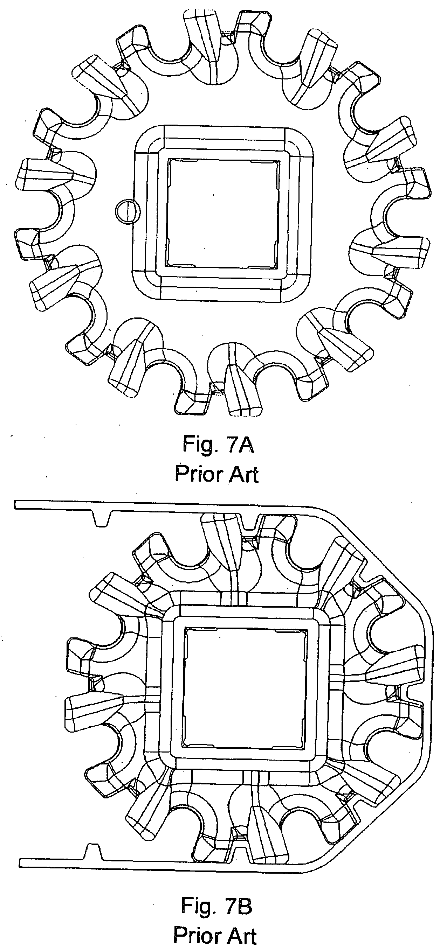

Sprockets for driving flat belts are usually made from stainless steel or plastic that is machined or molded. In food processing applications, sprocket drives are a particularly critical area for cleaning. It is important to be able to periodically remove the residual matters from the sprockets and on the rear side of the belt, in order to avoid bacteria growth and spoilage of the food processed on the belt. For this purpose sprockets have been designed with large openings to allow cleaning medium to pass from the side and reach the critical areas to be cleaned. Such sprockets are disclosed for use with modular belts in US 2009/0050185 A1, according to the preamble of claim 1. However, such sprockets are not ideally suited for use with flat (non-modular) belts. For example, as depicted in Figs. 7A-7B, the shape of the teeth, and lack of support between adjacent pairs of teeth, allow a flexible belt to buckle as it is forced around the periphery of the sprocket while the belt is under tension. Over time, this buckling causes damage to the belt including cracks on the surface of the belt.

Accordingly, there is a need for an improved cleaning system that incorporates a sprocket for use with flexible belts and that avoids the above-described shortcomings.

### SUMMARY OF THE INVENTION

The present invention meets the above described need by providing a cleaning-in-place system according to independent claim 1. Preferred embodiments will emerge from the dependent claims.

The present invention provides a sprocket for a flat belt. The flat belt may have transverse ribs. The sprocket rotates about a shaft. The sprocket has a central opening for receiving the shaft. The sprocket has a plurality of teeth disposed around the periphery of the body. The teeth are angularly spaced about the axis such that each tooth is spaced from the adjacent teeth by a first opening, for application of a cleaning medium or other medium as discussed in greater detail herein. Each tooth has a belt-contacting surface which is convex in shape such that the outer-most periphery of the sprocket is generally circular. The belt-contacting surfaces of the teeth guide the belt around the periphery of the sprocket in order to minimize the ability of the belt to buckle.

The first opening may be circular, trapezoidal, or any other shape. The first opening is configured expose the underside of the belt to cleaning medium.

The teeth may each further comprise a second tooth such that pairs of teeth are disposed around the periphery of the body, the each pair being spaced from the adjacent pair by the first opening. Each tooth of a pair of teeth may be spaced from the other tooth of the pair by a second opening. The second opening is configured to engage a rib of the belt. The second openings may be configured to be larger than the corresponding ribs to allow cleaning medium to pass between the sprocket and the ribs.

A cleaning system may be arranged proximate to the sprockets such that a cleaning medium is sprayed through the first opening into the opening disposed adjacent to the underside of the belt when the belt engages with the sprocket. The cleaning system may include a manifold in combination with spray nozzles pointed toward the sprocket and/or belt.

### BRIEF DESCRIPTION OF THE DRAWINGS

The invention is illustrated in the drawings in which like reference characters designate the same or similar parts throughout the figures of which:
Figure 1A is a perspective view of a sprocket suitable for use with a flat belt;
Figure 1B is a side elevational view of the sprocket of Figure 1A;
Figure 1C is an end elevational view of the sprocket of Figure 1A and 1B;
Figure 2 is a side elevational view of the sprocket of Figures 1A-1C with a flexible belt engaged thereon;
Figure 3 is a perspective view of two sprockets and a flat belt engaged thereon;
Figure 4A is a perspective view of another sprocket suitable for use with a flat belt;
Figure 4B is a side elevational view of the sprocket of Figure 4A;
Figure 4C is an end elevational view of the sprocket of Figure 4A and 4B;
Figure 5 is a side elevational view of the sprocket of Figures 4A-4C with a flexible belt engaged thereon;
Figure 6 is a prespective view of two sprockets with a flexible belt engaged thereon;
Figure 7A is a side elevational view of a prior art sprocket;
Figure 7B is a side elevational view of the prior art sprocket with a flexible belt engaged thereon;
Figure 8 is a perspective view of a belt traversing over sprockets and a cleaning-in-place system of the present invention, with a portion of the belt removed for clarity;
Figure 9 is a side view of the cleaning-in-place system of Figure 8, with a side and a portion of the belt removed for clarity;
Figure 10 is another side view of the cleaning-in-place system of Figures 8 and 9, with additional portions removed for clarity;
Figure 11 is a front view of the cleaning-in-place system of Figures 8-10, with the belt removed for clarity;
Figure 12 is a rotated view of a portion of a cleaning-in-place system according to an embodiment of the present invention; and,
Figure 13 is another rotated view of the portion of the cleaning-in-place system of Figure 12.

### DETAILED DESCRIPTION OF THE INVENTION

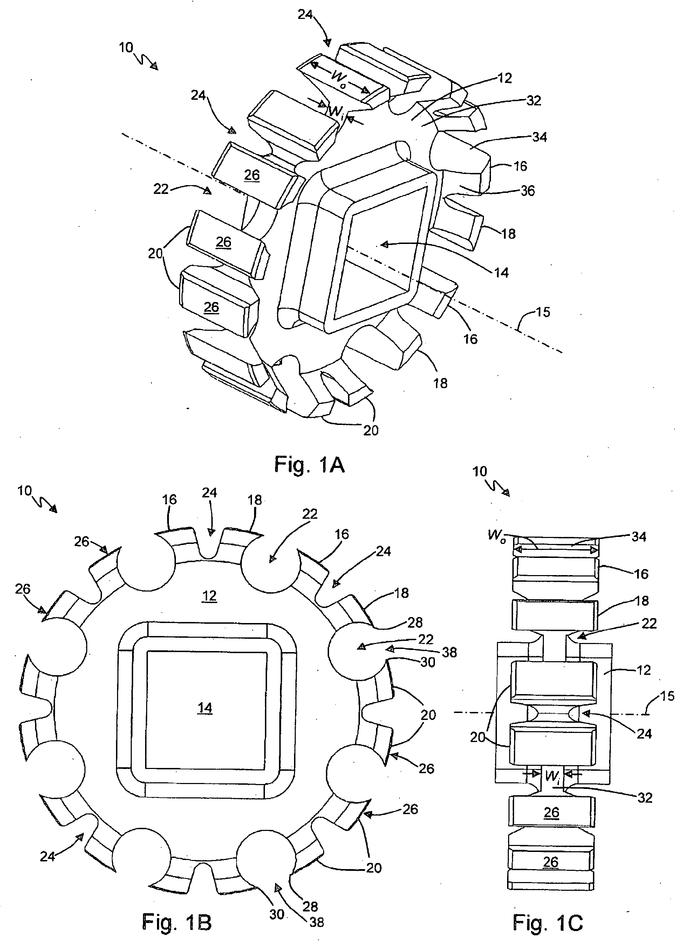

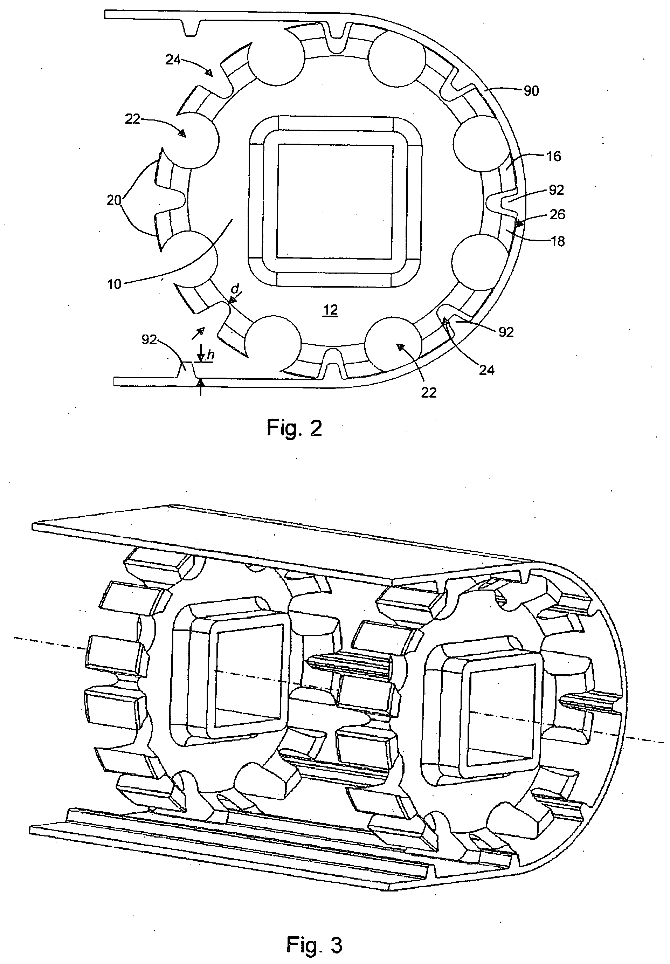

Figs. 1A-1C depict a sprocket 10 having a body 12 which may be constructed from stainless steel, plastic, or other suitable materials generally known to be food compatible and easily cleanable. The sprocket 10 includes a central opening 14 for engaging a shaft (not shown). The shaft may be a drive shaft. The central opening 14 may be shaped to cause the sprocket 10 to rotate as the shaft is rotated; for example, the central opening 14 may be formed in the shape of a square. In this manner, the sprocket 10 may rotate about an axis 15 that is coincident with the shaft in order to drive a belt 90 (see, e.g., Fig. 2). The sprocket 10 may be an idling sprocket which is rotated about the axis 15 by movement of the belt 90 around the sprocket 10. The central opening 14 may be formed in other shapes to accommodate different shaft geometries as will be evident to those of ordinary skill in the art based on this disclosure.

The sprocket 10 has a plurality of teeth 16, 18 disposed in pairs 20 around the periphery of the body 12. Each tooth 16, 18 has a belt-contacting surface 26. The belt-contacting surface 26 is convex in shape such that the outer-most periphery of the sprocket 10, as defined by the belt-contacting surfaces 26 of the teeth 16, 18, is generally circular. The discontinuous circle formed by the belt-contacting surfaces 26 of the teeth 16, 18 is centered on the axis 15 and guides the belt 90 around the periphery of the sprocket 10 in order to minimize the ability of the belt 90 to buckle.

The pairs 20 of teeth are angularly spaced about the axis 15 such that each pair 20 of teeth is spaced from the adjacent pairs 20 of teeth by a first opening 22. The first opening 22 is configured to align with the underside of the belt 90 when the belt 90 is engaged with the sprocket 10 as best shown in Figs. 2 and 3. In this way, the first opening 22 allows for cleaning medium sprayed generally toward the sprocket 10 and belt 90 to reach the underside of the belt 90. The first opening 22 may be shaped to allow access of cleaning medium to the belt 90 while maintaining a necessary amount of belt-contacting surface 26 of the teeth 16, 18 to prevent buckling of the belt 90. The cleaning medium may comprise a liquid, gas, a mixture of liquid and gas, a dust, a foam or any other form suitable for cleaning (collectively referred to as "medium", "fluid", or "cleaning fluid"). The medium may also serve other purposes in place of or in addition to cleaning such as sanitation or drying.

In the non-limiting example depicted in Figs. 1B and 2, the first opening 22 is circular in shape where a chord of the circle intersects with the periphery of the sprocket 10 thus forming edges 28, 30. As such, the wide circular formation of first opening 22 allows ample cleaning medium to circulate, while the smaller peripheral gap created by edges 28, 30 allows the appropriate belt-contacting surfaces 26 to remain on the teeth 16, 18. The appropriate size of the gap created by edges 28, 30 will depend on the specific application. For example, the stiffness of the belt and/or the number and spacing of ribs in the belt will necessitate more or less support by the belt-contacting surfaces of the teeth of the sprocket. The edges 28, 30 or any edges formed by the elements of the disclosed sprockets may be beveled, rounded, or the like. The gap formed by edges 28, 30 may be considered a belt interface portion 38 of the first opening 22. Such belt interface portion 38 may be narrower than a largest diameter (or dimension) of the first opening.

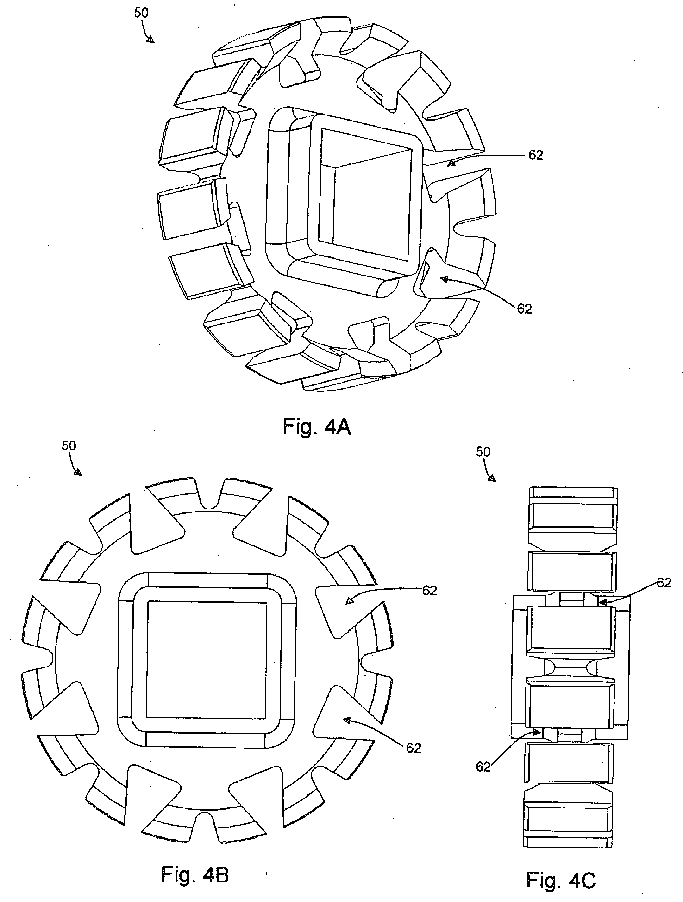

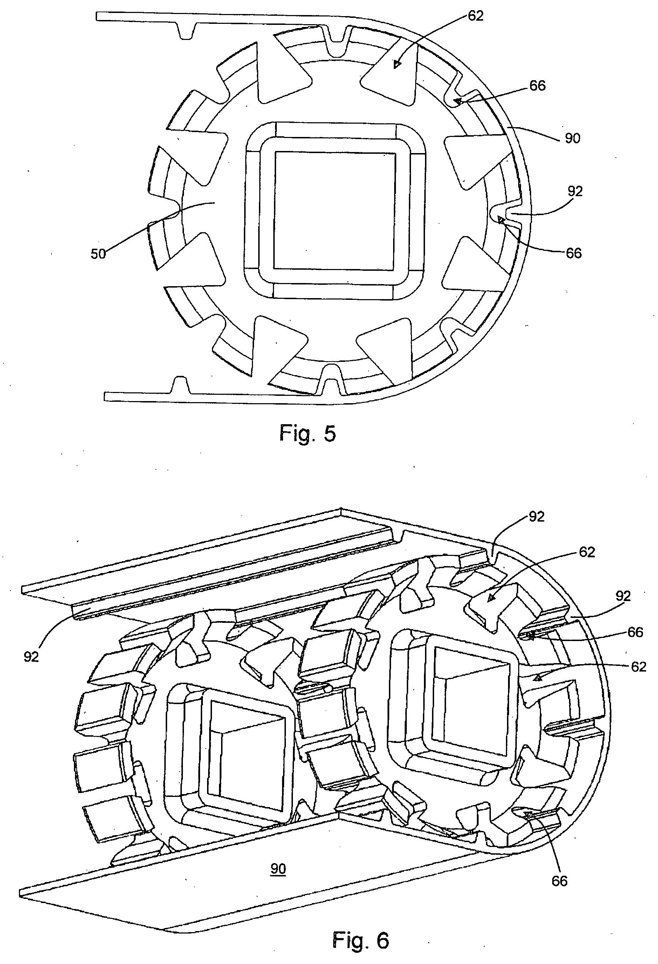

Another embodiment of a sprocket 50 is depicted in Figs. 4A-6, wherein the first opening 62 is trapezoidal. Other shapes and sizes suitable for the first opening will be evident to those of ordinary skill in the art based on this disclosure. The first opening may also comprise multiple openings. As such, a belt may be exposed to cleaning medium at more than one position between the ribs of the belt.

The belt-contacting surfaces 26 of the sprocket 10 may make up approximately 50 percent of the circumference of the sprocket 10 (the first openings 22 and second openings 24 making up the other 50 percent of the circumference). The belt-contacting surfaces 26 may make up more or less then 50 percent of the circumference of the sprocket 10 depending on the application (e.g., belt stiffness, number and spacing of ribs, etc.).

Each tooth 16, 18 of a pair 20 of teeth may be spaced from the other tooth 18, 16 of the pair 20 by a second opening 24. The second opening 24 is configured to engage a rib 92 of the belt 90. The second opening 24 may be, for example but not limited to, tapered in shape to engage a tapered rib 92. The second opening 24 may be configured to be larger than the corresponding rib 92. For example, a depth d of the second opening 24 may be greater in length than a height h of the corresponding rib 92. In this manner, cleaning medium may pass between the sprocket 10 and the rib 92 while the belt 90 is engaged by the sprocket 10 in order to flush contaminants from the rib 92 area of the belt 90.

The body 12 of the sprocket 10 may have a longitudinal width which varies. For example, as best shown in Fig. 1A, an inner portion 32 of the body 12 may have a width *Wᵢ* which is less than a width *Wₒ* of an outer portion 34 of the body 12. In this manner, the volume of material necessary for the body 12 and the mass of the body 12 may be minimized (due to the relatively narrow width *Wᵢ* of the inner portion 32) while still providing a large belt-contacting surface 26 (due to the relatively large width *Wₒ* of the outer portion 34). The body 12 may further have a transition portion 36 where the width gradually increases from *Wᵢ* to *Wₒ*.

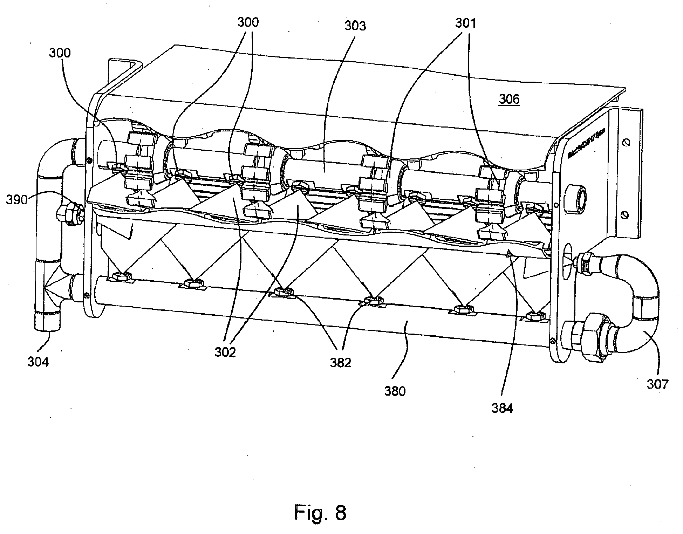

The reduced width *Wᵢ* of the inner portion 32 also has the benefit of improving access of cleaning medium to the underside of belt 90, especially to a portion of the belt 90 which is located between two sprockets (see, e.g., Fig. 8, which shows where a V-shaped spray of cleaning medium may be less hindered by a reduced width *Wᵢ*).

Turning to Fig. 2, the sprocket 10 is shown engaged with the belt 90. The belt-contacting surfaces 26 of the teeth 16, 18 engage with and ease the belt around the periphery of the sprocket 10 and the second openings 24 engage with the transverse ribs 92 of the belt 90. Also, the first openings 22 provide large openings and improved access to the underside of the belt 90 for cleaning when the belt 90 passes over the sprocket 10, while still maintaining sufficient belt-contacting surface 26 to minimize the risk of buckling of the belt 90. The relation of the first openings 22 and the inner portion 30, transition portion 34, and outer portion 32 of the sprocket may allow improved access of the cleaning medium to the belt 90. Similarly, the varying width of the body 12 at the second openings 24 may allow improve access of the cleaning medium to the ribs 92.

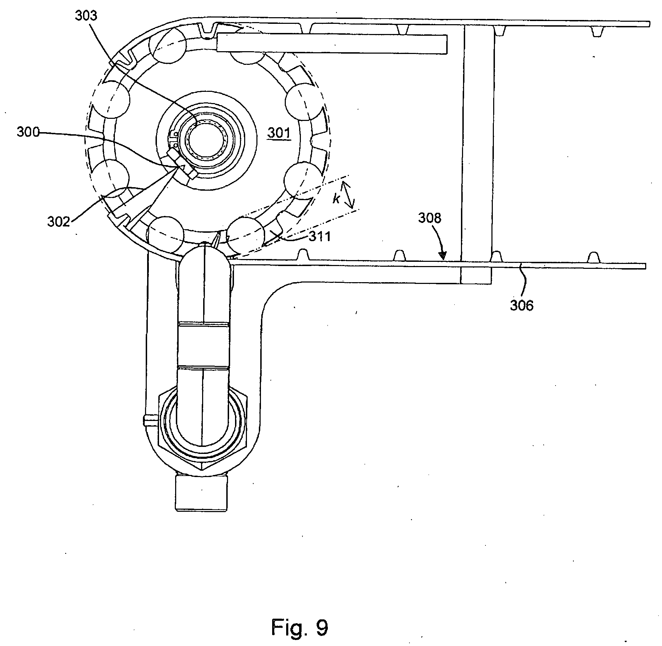

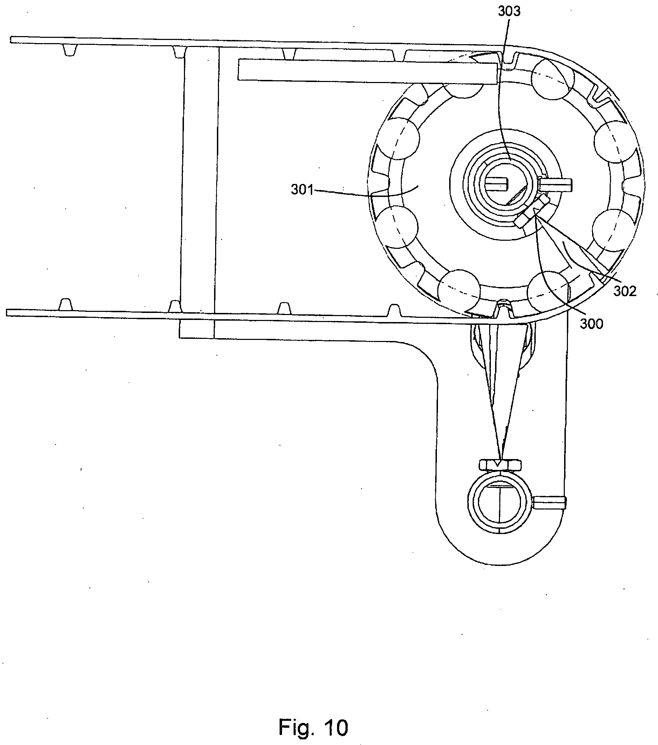

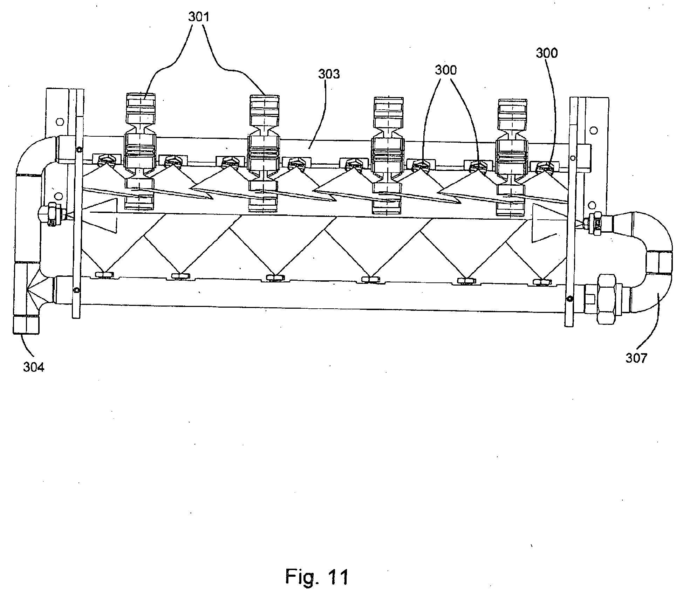

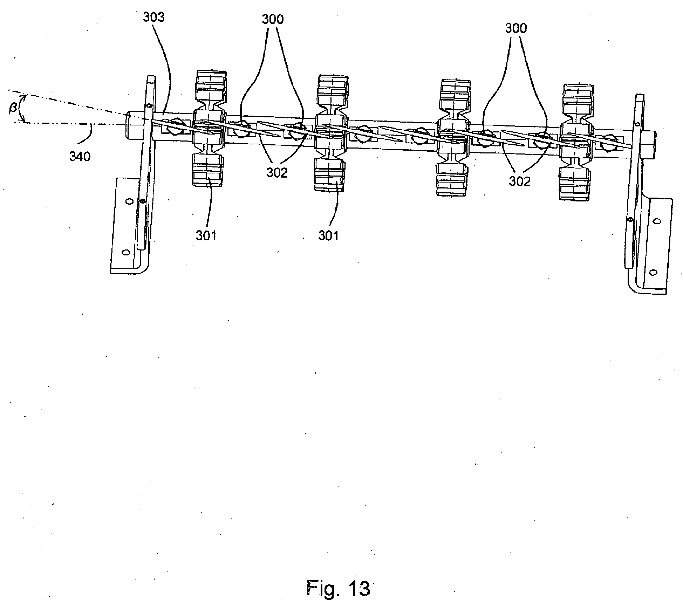

The sprockets described above are designed such that the underside of the belt is generally accessible regardless of the position of the sprocket. This sprocket design combined with the spray techniques described in detail below provide for optimal cleaning of flat belts. As shown in Figs. 8-13, spray nozzles 300 are located on a sprocket shaft 303. The shaft 303 comprises a stationary hollow shaft or thick-walled tube. The sprockets 301 rotate on the shaft 303 which may be constructed of steel or other materials or may be coated with a ceramic or plastic coating. The cleaning medium enters through an inlet 304 and passes through the hollow shaft 303 and exits the shaft 303 as a spray 302 through the nozzles 300. As best shown in Figs. 11-13, the nozzles 300 are primarily disposed on the shaft 303 between the sprockets. There may also be a nozzle 300 located at the end of a curved section 307 extending from the end of the shaft 303. Location of the nozzles 300 on the shaft 303 provides for an optimal spray angle α as described in greater detail below. The sprays 302 are designed to be generally flat (best shown in Fig. 13) to minimize medium consumption and to improve the ability of the spray to enter into the openings *k* (Fig. 9) between the sprocket teeth 311 and onto the underside 308 of the belt 306.

As described in greater detail below, the best cleaning performance at minimal cleaning medium consumption is achieved with a combination of spray angle and pressure, relative to the sprocket diameter (i.e., distance of spray nozzle from the belt surface). The temperature of the cleaning medium also needs to be adapted to the specific process. Also, the supply of the cleaning medium may be controlled by a customized program to limit the spray time for lowest possible use of cleaning medium. The program may be adapted to the specific requirements of the customer production process.

As shown in Fig. 8, the cleaning-in-place system of the present invention may be installed on the idling or nondriven shaft 303 of a flat conveyor belt 306. The belt 306 runs over a plurality of sprockets 301. The sprockets 301 are rotatably mounted on the stationary hollow shaft or thick-walled tube 303. The shaft 303 is equipped with a number of spray nozzles 300 positioned between the sprockets 301. The spray is directed to the underside 308 of the belt 306 as it passes over the sprockets 301. The spray is directed approximately radially. As described above, the design of the sprocket 301 is made in such a way that the underside 308 of the belt 306 is largely not covered and therefore the cleaning medium can impinge the underside.

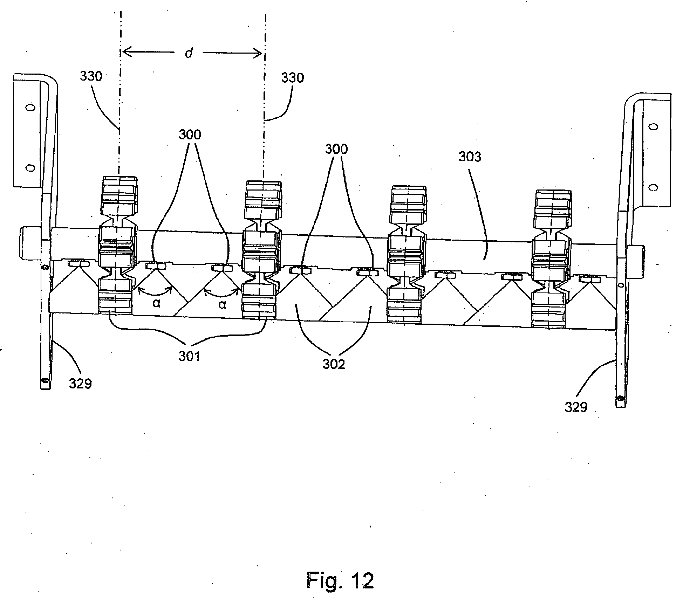

Turning to Fig. 12, the cleaning-in-place system is shown with the belt 306 and other components removed for clarity. The distance d between the center lines 330 of adjacent sprockets 301 determines the distance that the spray must travel and is determined by the spray angle α. With a larger spray angle, the sprockets 301 could be placed farther apart. As shown, a pair of supports 329 hold the stationary shaft 303 in position. The spray patterns overlap at each side.

Turning to Fig. 11, the overlap of sprays is sufficient to allow the cleaning medium to impinge the underside of the belt through the openings k between the sprocket teeth.

In Fig. 13, the spray nozzles 300 have a spray pattern 302 that is generally flat and therefore is better at entering the openings k between the sprocket teeth and at entering the rib-engaging gaps. The nozzles 300 are aligned at an angle β to the centerline 340 of the shaft 303. This angle may be between five and fifteen degrees, and is preferably ten degrees. This angle avoids disturbance between the spray patterns of adjacent nozzles 300 and ensures the penetration of the spray medium through the openings and gaps from both sides of the sprocket. As a result of the overlap, the belt surface can be fully covered.

The following table illustrates the spray configuration for a sprocket with a pitch diameter of 165 mm.

| | |
|---|---|
| Sprocket pitch diameter | 165mm (6.5 in.) |
| Nozzle type | Lechler 612.487.16 |
| Spray angle | 120 degrees |
| Spray alignment | 10 degrees |
| Sprocket/nozzle increment | 150 mm (6 in.) |
| Number of nozzles per belt width | 6/m (2/ft.) |
| Fluid pressure (bar) | 2-10 bar (8 bar preferred) |
| Fluid consumption at 8 bar/nozzle | 3.19 liters/min. |

The sprocket pitch diameter should not be smaller than 130 mm (5 in.) and not larger than 200 mm (8 in.). For other sprocket sizes, the spray angles and/or the spray/sprocket distances may be adjusted. The nozzle identified above is a well known brand that is commercially available from several sources. Other nozzles would also be suitable as will be evident to those of ordinary skill in the art based on this disclosure.

A cleaning-in-place system of the present invention may further comprise a top surface cleaning manifold 380 which includes spray nozzles 382 configured to spray cleaning medium on the top surface 384 of the belt 306 (see, e.g., Figs. 8, 10, and 11).

While the invention has been described in connection with certain embodiments, it is not intended to limit the scope of the invention to the particular forms set forth, but, on the contrary, it is intended to cover such alternatives, modifications, and equivalents as may be included within the scope of the invention as defined by the appended claims.

## Claims

1. Cleaning-in-place system with a flexible belt (90; 306), the cleaning-in-place system comprising:
a non-rotating hollow shaft (303), having an open, first end adapted for fluid communication with a source of a fluid under pressure;
at least one sprocket (10; 301) rotatably mounted to the hollow shaft (303), the at least one sprocket (10; 301) rotating in driven relation about the shaft (303) as the flat belt (90; 306) passes over and around the at least one sprocket (10; 301);
a plurality of nozzle members (300) mounted on the hollow shaft (303) in laterally spaced relation to one another, each nozzle member (300) being in fluid communication with the fluid under pressure;
wherein the at least one sprocket (10; 301) comprises a body (12), the body (12) having a plurality of teeth (16, 18; 311) disposed in pairs (20), the pairs (20) being angularly spaced about a rotating axis (15) of the sprocket (10; 301), wherein each pair (20) of teeth is spaced from adjacent pairs (20) of teeth by a first opening (22; 62), and wherein each tooth (16, 18; 311) in each pair (20) of teeth is spaced from the other tooth (16, 18; 311) in the pair (20) by a second opening (24), **characterized in that** the belt is non-modular and flat and **in that** a belt-contacting surface (26) of each tooth (16, 18; 311) is convex such that the outer-most periphery of the body (12), as defined by the belt-contacting surfaces (26) of the teeth (16, 18; 311), is generally circular, wherein the belt-contacting surfaces (26) make up approximately 50 percent or more than 50 percent of the circumference of the sprocket.

2. Cleaning-in-place system according to claim 1, wherein the plurality of nozzle members (300) provide a flat spray pattern aligned along a line that is angled with respect to a longitudinal axis of the shaft (303) by up to fifteen degrees.

3. Cleaning-in-place system according to claim 1 or 2, wherein the plurality of nozzle members (300) are aligned along a line that angled with respect to a longitudinal axis of the shaft (303) by approximately ten degrees.

4. Cleaning-in-place system according to any one of claims 1 to 3, wherein the at least one sprocket comprises a plurality of sprockets disposed along the shaft.

5. Cleaning-in-place system according to claim 4, wherein at least one nozzle member (300) is disposed between each pair (20) of adjacent sprockets (10; 301).

6. Cleaning-in-place system according to any one of claims 1 to 5, wherein at least one of the nozzle members (300) is aligned such that spray from the nozzle member (300) passes through the first opening (22; 62) formed between adjacent pairs (20) of teeth on the sprocket (10; 301).

7. Cleaning-in-place system according to any one of claims 1 to 6, wherein the spray from a first nozzle member (300) overlaps with the spray from a successive nozzle member (300), through the first opening (22; 62).

8. Cleaning-in-place system according to any one of claims 1 to 7, wherein the nozzle members (300) produce a spray pattern having a spray angle of ninety to one-hundred twenty degrees.

9. Cleaning-in-place system according to any one of claims 1 to 8, wherein the fluid pressure is 2-10 bars.

10. Cleaning-in-place system according to any one of claims 1 to 9, wherein the sprocket pitch diameter is 130 to 200 mm.

11. Cleaning-in-place system according to any one of claims 1 to 10, further comprising:
a manifold (380) in fluid communication with the source of fluid; and
at least one manifold nozzle member (382) mounted on the manifold (380), the at least one manifold nozzle member (382) being in fluid communication with the fluid under pressure;
wherein the manifold (380) is configured proximate a top surface of the flat belt (90; 306).

12. Cleaning-in-place system according to any one of claims 1 to 11, wherein a belt interface portion (38) of the first opening (22; 62) is narrower than a largest diameter or dimension of the first opening (22; 62) in a side elevational view.

13. Cleaning-in-place system according to any one of claims 1 to 12, wherein the first opening (22) is circular in shape.

14. Cleaning-in-place system according to any one of claims 1 to 12, wherein the first opening (62) is trapezoidal.

15. Cleaning-in-place system according to any one of claims 1 to 14, wherein a width of an inner portion (32) of the body (12) is less than a width of an outer portion (34) of the body (12).

## Patentansprüche

1. Vor-Ort-Reinigungssystem mit einem flexiblen Band (90; 306), wobei das Vor-Ort-Reinigungssystem umfasst:
eine nicht rotierende hohle Welle (303) mit einem offenen, ersten Ende (304), das zur fluiden Verbindung mit einer Quelle eines Fluids unter Druck geeignet ist;
mindestens ein Zahnrad (10; 301), welches drehbar auf der hohlen Welle (303) angebracht ist, wobei sich das mindestens eine Zahnrad (10; 301) angetrieben um die Welle (303) dreht, wenn das flache Band (90; 306) über und um das mindestens eine Zahnrad (10; 301) läuft;
eine Vielzahl von Düsenelementen (300), die auf der hohlen Welle (303) seitlich beabstandet zueinander angebracht sind, wobei jedes Düsenelement (300) in fluider Verbindung mit dem Fluid unter Druck steht;
wobei das mindestens eine Zahnrad (10; 301) einen Körper (12) umfasst, wobei der Körper (12) eine Vielzahl von Zähnen (16, 18; 311) aufweist, die in Paaren (20) angeordnet sind, welche um einen Winkel um eine Rotationsachse (15) des Zahnrads (10; 301) beabstandet sind, wobei jedes Paar (20) von Zähnen von benachbarten Paaren (20) von Zähnen durch eine erste Öffnung (22; 62) beabstandet ist, und wobei jeder Zahn (16, 18; 311) in jedem Paar (20) von Zähnen von dem anderen Zahn (16, 18; 311) in dem Paar (20) durch eine zweite Öffnung (24) beabstandet ist, **dadurch gekennzeichnet, dass** das Band nichtmodular und flach ist und dass eine bandberührende Oberfläche (26) eines jeden Zahns (16, 18; 311) derart konvex ist, dass die äusserste Peripherie des Körpers (12), definiert durch die bandberührenden Oberflächen (26) der Zähne (16, 18; 311), allgemein kreisförmig ist, wobei die bandberührenden Oberflächen (26) ungefähr 50 % oder mehr als 50 % des Umfangs des Zahnrads ausmachen.

2. Vor-Ort-Reinigungssystem gemäss Anspruch 1, wobei die Vielzahl an Düsenelementen (300) ein flaches Sprühmuster erzeugt, welches entlang einer Linie ausgerichtet ist, welche einen Winkel zu einer Längsachse der Welle (303) von bis zu fünfzehn Grad bildet.

3. Vor-Ort-Reinigungssystem gemäss Anspruch 1 oder 2, wobei die Vielzahl an Düsenelementen (300) entlang einer Linie ausgerichtet ist, welche einen Winkel zu einer Längsachse der Welle (303) von etwa zehn Grad bildet.

4. Vor-Ort-Reinigungssystem gemäss einem der Ansprüche 1 bis 3, wobei das mindestens eine Zahnrad eine Vielzahl von entlang der Welle angeordneten Zahnrädern umfasst.

5. Vor-Ort-Reinigungssystem gemäss Anspruch 4, wobei mindestens ein Düsenelement (300) zwischen jedem Paar (20) benachbarter Zahnräder (10; 301) angeordnet ist.

6. Vor-Ort-Reinigungssystem gemäss einem der Ansprüche 1 bis 5, wobei mindestens eines der Düsenelemente (300) so ausgerichtet ist, dass Sprühmittel vom Düsenelement (300) durch die zwischen benachbarten Paaren (20) von Zähnen (311) auf dem Zahnrad (10; 301) gebildete erste Öffnung (22; 62) durchgeht.

7. Vor-Ort-Reinigungssystem gemäss einem der Ansprüche 1 bis 6, wobei das Sprühmittel eines ersten Düsenelements (300) mit dem Sprühmittel eines folgenden Düsenelements (300) durch die erste Öffnung (22; 62) hindurch überlappt.

8. Vor-Ort-Reinigungssystem gemäss einem der Ansprüche 1 bis 7, wobei die Düsenelemente (300) ein Sprühmuster mit einem Sprühwinkel von neunzig bis hundertzwanzig Grad erzeugen.

9. Vor-Ort-Reinigungssystem gemäss einem der Ansprüche 1 bis 8, wobei der Fluiddruck 2-10 bar beträgt.

10. Vor-Ort-Reinigungssystem gemäss einem der Ansprüche 1 bis 9, wobei der Teilkreisdurchmesser des Zahnrads 130 bis 200 mm beträgt.

11. Vor-Ort-Reinigungssystem gemäss einem der Ansprüche 1 bis 10, des Weiteren umfassend:
einen Verteiler (380) in fluider Verbindung mit der Fluidquelle; und
mindestens ein auf dem Verteiler (380) montiertes Verteilerdüsenelement (382), wobei das mindestens eine Verteilerdüsenelement (382) in fluider Verbindung mit dem Fluid unter Druck steht;
wobei der Verteiler (380) in der Nähe einer oberen Oberfläche des flachen Bands (90; 306) angeordnet ist.

12. Vor-Ort-Reinigungssystem gemäss einem der Ansprüche 1 bis 11, wobei ein Bandübergangsabschnitt (38) der ersten Öffnung (22; 62) schmaler ist als ein grösster Durchmesser oder eine grösste Abmessung der ersten Öffnung (22; 62) in einer Seitenansicht.

13. Vor-Ort-Reinigungssystem gemäss einem der Ansprüche 1 bis 12, wobei die erste Öffnung (22) kreisförmig ist.

14. Vor-Ort-Reinigungssystem gemäss einem der Ansprüche 1 bis 12, wobei die erste Öffnung (62) trapezförmig ist.

15. Vor-Ort-Reinigungssystem gemäss einem der Ansprüche 1 bis 14, wobei eine Breite eines inneren Teils (32) des Körpers (12) geringer ist als eine Breite eines äusseren Teils (34) des Körpers (12).

## Revendications

1. Système de nettoyage in-situ à bande souple (90 ; 306), le système de nettoyage in-situ comprenant :
un arbre creux non tournant (303), comportant une première extrémité ouverte conçue pour une communication fluidique avec une source d'un fluide sous pression ;
au moins un pignon (10 ; 301) monté mobile en rotation sur l'arbre creux (303), ledit au moins un pignon (10 ; 301) étant entraîné autour de l'arbre (303) lorsque la bande plate (90 ; 306) passe sur ledit au moins un pignon (10 ; 301) et autour de ce dernier ;
plusieurs éléments de buse (300) montés sur l'arbre creux (303), espacés latéralement les uns des autres, chaque élément de buse (300) étant en communication fluidique avec le fluide sous pression ;
dans lequel ledit au moins un pignon (10 ; 301) comprend un corps (12), le corps (12) comportant plusieurs dents (16, 18 ; 311) disposées par paires (20), les paires (20) étant espacées angulairement autour d'un axe de rotation (15) du pignon (10 ; 301), dans lequel chaque paire (20) de dents est espacée de paires adjacentes (20) de dents par une première ouverture (22 ; 62), et dans lequel chaque dent (16, 18 ; 311) de chaque paire (20) de dents est espacée de l'autre dent (16, 18 ; 311) de la paire (20) par une seconde ouverture (24), **caractérisé en ce que** la bande est non modulaire et plate et **en ce qu'**une surface (26) de contact de bande de chaque dent (16, 18 ; 311) est convexe de sorte que la périphérie la plus à l'extérieur du corps (12), telle que définie par les surfaces (26) de contact de bande des dents (16, 18 ; 311), est globalement circulaire, dans lequel les surfaces (26) de contact de bande représentent environ 50 pourcent ou plus de 50 pourcent de la circonférence du pignon.

2. Système de nettoyage in-situ selon la revendication 1, dans lequel les plusieurs éléments de buse (300) établissent un motif de pulvérisation plat aligné le long d'une ligne qui forme un angle d'au plus quinze degrés avec un axe longitudinal de l'arbre (303).

3. Système de nettoyage in-situ selon la revendication 1 ou 2, dans lequel les plusieurs éléments de buse (300) sont alignés le long d'une ligne qui forme un angle d'environ dix degrés avec un axe longitudinal de l'arbre (303).

4. Système de nettoyage in-situ selon l'une quelconque des revendications 1 à 3, dans lequel ledit au moins un pignon comprend plusieurs pignons disposés le long de l'arbre.

5. Système de nettoyage in-situ selon la revendication 4, dans lequel au moins un élément de buse (300) est disposé entre chaque paire (20) de pignons adjacents (10 ; 301).

6. Système de nettoyage in-situ selon l'une quelconque des revendications 1 à 5, dans lequel au moins un des éléments de buse (300) est aligné de sorte que la pulvérisation assurée à partir de l'élément de buse (300) passe à travers la première ouverture (22 ; 62) formée entre des paires adjacentes (20) de dents du pignon (10 ; 301).

7. Système de nettoyage in-situ selon l'une quelconque des revendications 1 à 6, dans lequel la pulvérisation assurée à partir d'un premier élément de buse (300) se superpose à la pulvérisation assurée à partir d'un élément de buse suivant (300), à travers la première ouverture (22 ; 62).

8. Système de nettoyage in-situ selon l'une quelconque des revendications 1 à 7, dans lequel les éléments de buse (300) produisent un motif de pulvérisation ayant un angle de pulvérisation de quatre-vingt-dix degrés à cent vingt degrés.

9. Système de nettoyage in-situ selon l'une quelconque des revendications 1 à 8, dans lequel la pression de fluide va de 2 à 10 bars.

10. Système de nettoyage in-situ selon l'une quelconque des revendications 1 à 9, dans lequel le diamètre de pas de pignon va de 130 à 200 mm.

11. Système de nettoyage in-situ selon l'une quelconque des revendications 1 à 10, comprenant en outre :
une rampe de distribution (380) en communication fluidique avec la source de fluide ; et
au moins un élément de buse (382) de rampe de distribution monté sur la rampe de distribution (380), ledit au moins un élément de buse (382) de rampe de distribution étant en communication fluidique avec le fluide sous pression ;
dans lequel la rampe de distribution (380) est disposée à proximité d'une surface supérieure de la bande plate (90 ; 306).

12. Système de nettoyage in-situ selon l'une quelconque des revendications 1 à 11, dans lequel une partie d'interface (38) de bande de la première ouverture (22 ; 62) est plus petite que le plus grand diamètre, ou que la plus grande dimension, de la première ouverture (22 ; 62) en vue de côté en élévation.

13. Système de nettoyage in-situ selon l'une quelconque des revendications 1 à 12, dans lequel la première ouverture (22) a une forme circulaire.

14. Système de nettoyage in-situ selon l'une quelconque des revendications 1 à 12, dans lequel la première ouverture (62) est trapézoïdale.

15. Système de nettoyage in-situ selon l'une quelconque des revendications 1 à 14, dans lequel une largeur d'une partie intérieure (32) du corps (12) est inférieure à une largeur d'une partie extérieure (34) du corps (12).
